(19) **Europäisches Patentamt**

**European Patent Office**

**Office européen des brevets**

(11) **EP 0 897 106 B1**

(12) **EUROPÄISCHE PATENTSCHRIFT**

(45) Veröffentlichungstag und Bekanntmachung des Hinweises auf die Patenterteilung:
**03.07.2002 Patentblatt 2002/27**

(51) Int Cl.⁷: **G01L 19/06**, F02C 7/00

(21) Anmeldenummer: **97810568.2**

(22) Anmeldetag: **14.08.1997**

(54) **Druckschwankungsmessungen in einem Heissgasraum ( Brennkammer einer Gasturbine )**

Measurement of pressure variations in a hot gas chamber ( gas turbine combustion chamber )

Mesure des variations de la pression dans une chambre de gaz chaud ( chambre de combustion d'une turbine à gaz )

(84) Benannte Vertragsstaaten:
**DE FR GB**

(43) Veröffentlichungstag der Anmeldung:
**17.02.1999 Patentblatt 1999/07**

(73) Patentinhaber: **Alstom**
**75116 Paris (FR)**

(72) Erfinder: **Keller, Jakob, Prof.-Dr.**
**5610 Wohlen (CH)**

(74) Vertreter: **Liebe, Rainer et al**
**ALSTOM (Switzerland)Ltd**
**CHSP Intellectual Property**
**Haselstrasse 16/699/5.OG**
**5401 Baden (CH)**

(56) Entgegenhaltungen:
**GB-A- 2 037 993        JP-A- 6 331 146**

EP 0 897 106 B1

**Beschreibung**

**TECHNISCHES GEBIET**

Die vorliegende Erfindung bezieht sich auf das Gebiet der Druckmesstechnik. Sie betrifft eine Einrichtung zum Messen von Druckschwankungen, insbesondere in der Brennkammer einer Gasturbine, mit einem mit heissen Gasen einer ersten Temperatur gefüllten Raum, welcher durch wenigstens eine Wand gegen einen auf einer niedrigeren zweiten Temperatur befindlichen Aussenraum abgegrenzt ist, wobei ein bezüglich der Druckschwankungen weitgehend von Endreflexionen freies Messrohr von dem Raum durch die wenigstens eine Wand in den Aussenraum geführt ist, und wobei im Aussenraum hinter der wenigstens einen Wand ein Druckaufnehmer zum Aufnehmen der Druckschwankungen an das Messrohr angeschlossen ist.

Eine solche Druckmesseinrichtung ist grundsätzlich aus dem Stand der Technik bekannt.

STAND DER TECHNIK

Es ist bekannt, mit einer vergleichsweise einfachen Einrichtung und guter Genauigkeit Druckschwankungen in einer Brennkammer zu messen, in welcher sich heisse Gase unter wechselnden Druckbedingungen befinden. Die Einrichtung besteht aus einem langen dünnen Rohr mit ungefähr 20 m Länge, dass mit dem einen Ende an dem Ort an die Brennkammer angeschlossen ist, wo der Druck bzw. die Druckschwankungen gemessen werden sollen. Der eigentliche Druckaufnehmer ist ausserhalb der heissen Brennkammer in der deutlich kälteren Umgebung seitlich an das dünne Messrohr angeschlossen. Dadurch ist es möglich, einen kostengünstigeren Druckaufnehmer einzusetzen, der nicht den hohen Temperaturen in der Brennkammer standhalten muss. Zugleich ergibt sich ein vereinfachter Zugang zu dem aussen angeordneten Druckaufnehmer, wodurch Wartung und Reparaturarbeiten vereinfacht und verbilligt werden.

Die hinter der beschriebenen Druckmesseinrichtung stehende wesentliche Idee ist, dass Messrohr, welches eine akustische Leitung für die zu messenden Druckoszillationen bildet, so auszubilden, dass in einem grossen Frequenzbereich praktisch keine Druckwellen im Rohr reflektiert werden und damit die Messungen mit dem Druckaufnehmer verfälschen. Das lange dünne Rohr dient dazu, die vom Messort in das Rohr einlaufenden Druckwellen exponentiell zu dämpfen, so dass Reflexionen aus dem Rohr zurück zum Druckaufnehmer weitgehend vermieden werden.

Trotz der exponentiellen Dämpfung des Messrohres können jedoch Probleme mit Wellenreflexionen auftreten. Sind über die Länge des Messrohres vergleichsweise abrupte Temperaturänderungen vorhanden, wie sie sich bei der Durchführung des Rohres aus einer Brennkammer durch einen mehrfach abgeschirmten Zwischenraum nach draussen zwangsläufig ergeben, können an diesen Temperatursprüngen Reflexionen der im Rohr laufenden Druckwellen hervorgerufen werden, die zurück zum Druckaufnehmer gelangen und dort die Messung verfälschen. Die Verfälschung der Messungen nimmt dabei mit zunehmender Frequenz der Druckoszillationen zu.

DARSTELLUNG DER ERFINDUNG

Es ist Aufgabe der Erfindung, eine Druckmesseinrichtung zu schaffen, welche eine Verfälschung der Druckmessungen durch reflektierte Druckwellen vermeidet oder zumindest drastisch reduziert.

Die Aufgabe wird bei einer Druckmesseinrichtung der eingangs genannten Art dadurch gelöst, dass am Messrohr erste Mittel vorgesehen sind, welche störende Reflexionen der sich im Messrohr ausbreitenden Druckwellen an Temperatursprüngen im Messrohr verhindern bzw. vor dem Eintritt in den Druckaufnehmer unschädlich machen. Grundsätzlich wäre es denkbar, Reflexionen an Temperatursprüngen entlang des Messrohres durch ein mathematisch-physikalische Modell zu beschreiben und bei der Auswertung der Messungen korrigierend mit einzubeziehen. Eine solche Lösung ist jedoch aufwendig und unflexibel in der Anwendung. Durch die erfindungsgemässen ersten Mittel am Messrohr werden Wellenreflexionen demgegenüber direkt im Messrohr unterdrückt bzw. unschädlich gemacht, so dass am Druckaufnehmer direkt das unverfälschte Signal vom Messort zur Verfügung steht.

Eine erste bevorzugte Ausführungsform der Druckmesseinrichtung nach der Erfindung zeichnet sich dadurch aus, dass im Messrohr Temperatursprünge vorhanden sind, dass die an den Temperatursprüngen im Messrohr auftretenden Reflexionen der Druckwellen durch Reflexionen an entsprechenden Durchmessersprüngen im Innendurchmesser des Messrohres kompensiert werden, dass die Durchmessersprünge im Messrohr an den Orten der Temperatursprünge angeordnet sind, und dass die jeweiligen Durchmesser eines Durchmessersprunges so gewählt sind, dass das Verhältnis der Durchmesser eines Durchmessersprunges gleich der 4ten Wurzel aus dem reziproken Verhältnis der Temperaturen des zugehörigen Temperatursprungs ist. Die Durchmessersprünge können ohne grossen Aufwand in das Messrohr eingebracht werden. Nachteilig ist jedoch, dass eine volle Kompensation bei fixen Durchmessersprüngen auch nur für fixe Temperatursprünge erreicht wird.

Eine zweite bevorzugte Ausführungsform der erfindungsgemässen Druckmesseinrichtung ist dadurch gekennzeichnet, dass die ersten Mittel derart ausgebildet sind, dass sie das Auftreten von Temperatursprüngen im Messrohr verhindern. Hierdurch werden anstelle einer Kompensation bereits entstandener Reflexionen die Ursachen für die Reflexionen direkt beseitigt. Dadurch ergibt sich eine hohe Messgenauigkeit des Systems über einen sehr weiten Frequenzbereich und praktisch unabhängig von den vorhandenen Temperaturen.

In einer ersten bevorzugten Weiterbildung dieser Ausführungsform umfassen die ersten Mittel eine Kühlgasquelle, aus welcher Kühlgas durch das Messrohr vom Aussenraum in den Heissgasraum strömt, und wird als Kühlgas ein inertes Gas verwendet. Hierdurch kann unabhängig von dem zu messenden Raum die für eine gleichmässige Temperaturverteilung im Messrohr notwendige Kühlung eingestellt und kontrolliert werden. Jedoch ist eine separate Kühlgasquelle notwendig, die einen erhöhten Installationsaufwand erfordert.

In einer zweiten bevorzugten Weiterbildung dieser Ausführungsform ist der Heissgasraum die Brennkammer (15) einer Gasturbine, wird der Brennkammer komprimierte Verbrennungsluft zugeführt, und wird ein Teil der komprimierten Verbrennungsluft abgezweigt und strömt als Kühlluft durch das Messrohr vom Aussenraum in den Heissgasraum. In diesem Fall ist eine separate Kühlgasquelle nicht erforderlich, wodurch sich die Druckmesseinrichtung wesentlich vereinfacht.

Weitere Ausführungsformen ergeben sich aus den abhängigen Ansprüchen.

KURZE ERLÄUTERUNG DER FIGUREN

Die Erfindung soll nachfolgend anhand von Ausführungsbeispielen im Zusammenhang mit der Zeichnung näher erläutert werden.

Es zeigen

Fig. 1 im Schnitt ein erstes bevorzugtes Ausführungsbeispiel der erfindungsgemässen Druckmesseinrichtung mit Durchmesserstufen zur Kompensation der Reflexionen an den Temperaturstufen;

Fig. 2 einen vergrösserten Ausschnitt aus Fig. 1 mit den einzeichneten verschiedenen Durchmessern des Messrohres;

Fig. 3 ein zweites bevorzugtes Ausführungsbeispiel der erfindungsgemässen Druckmesseinrichtung mit einer Kühlung des Messrohres durch Kühlgas aus einer externen Kühlgasquelle zur Vermeidung von Temperatursprüngen; und

Fig. 4 eine für Gasturbinen besonders geeignete Variante zu Fig. 3, bei der zur Kühlung des Messrohres stromaufwärts komprimierte Verbrennungsluft aus dem Plenum entnommen, durch einen Kühler geschickt und in das Messrohr eingespeist wird.

WEGE ZUR AUSFÜHRUNG DER ERFINDUNG

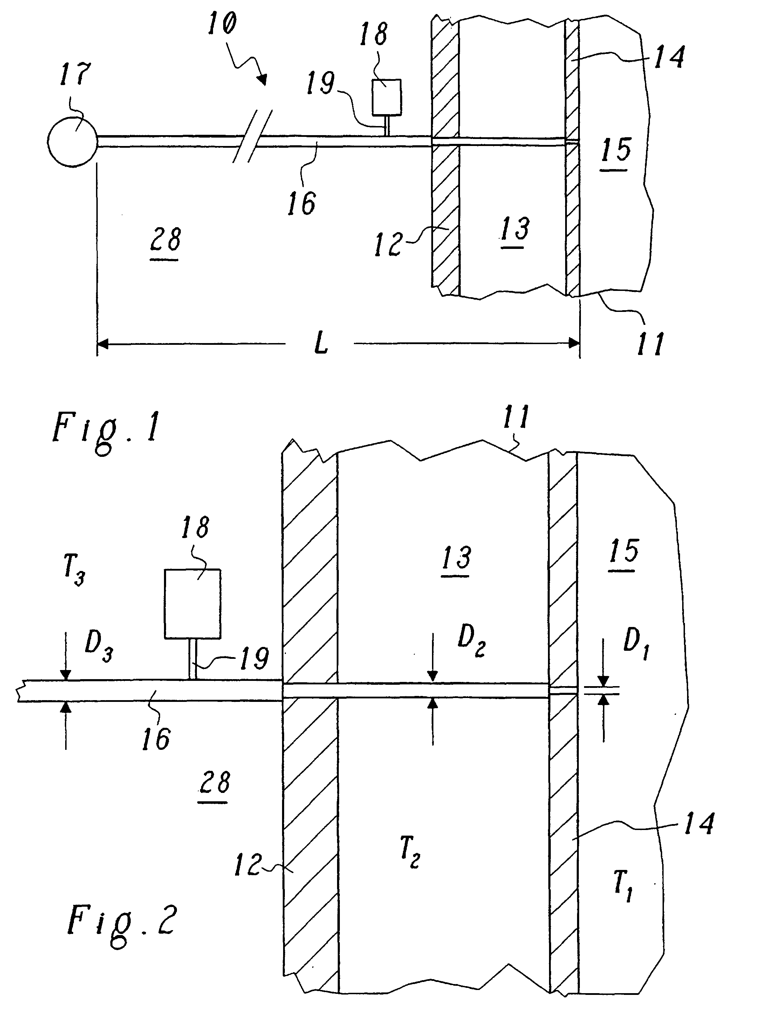

In Fig. 1 ist im Schnitt ein erstes bevorzugtes Ausführungsbeispiel der erfindungsgemässen Druckmesseinrichtung mit Durchmesserstufen zur Kompensation der Reflexionen an den Temperaturstufen wiedergegeben. Die Druckmesseinrichtung 10 misst die Druckschwankungen bzw. -oszillationen in einer Brennkammer 15, die durch eine Brennkammerwand 14 von einem Plenum 13 getrennt ist, welches zwischen der Brennkammerwand 14 und dem Gasturbinengehäuse 12 einer Gasturbine 11 angeordnet ist. Im Plenum 13 strömt die im Kompressorteil der Gasturbine 11 komprimierte Verbrennungsluft, die sich auf einer Temperatur T2 befindet (Fig. 2), die deutlich niedriger ist, als die Temperatur T1 in der Brennkammer 15. Ausserhalb des Gasturbinengehäuses 12, im Aussenraum 28, herrscht eine weitere Temperatur T3, die ihrerseits deutlich geringer ist als die Temperatur T2 im Plenum 13.

Die Druckmesseinrichtung 10 umfasst ein langes (z.B. 20 m) dünnes (z.B. 4 mm dickes) Messrohr 16, welches mit dem einen Ende am Messort in die Brennkammer 15 mündet, durch die Brennkammerwand 14, durch das Plenum 13, und durch das Gasturbinengehäuse 12 in den Aussenraum 28 geführt ist, wo es mit dem anderen Ende z.B. in einem Abschlussvolumen 17 endet. Im Aussenraum 28 gleich hinter dem Gasturbinengehäuse 12 ist seitlich am Messrohr 16 ein Druckaufnehmer 18 angeordnet und über ein Anschlussrohr 19 an das Messrohr 16 angeschlossen.

Wie man an den Fig. 1 und 2 leicht erkennen kann, ist das Messrohr 16 im Bereich der Wände 12 und 14 jeweils einem relativ abrupten Temperatursprung T3 -> T2 und T2 -> T1 ausgesetzt, der - wenn keine Gegenmassnahmen ergriffen würden - zu Reflexionen der von der Brennkammer 15 in das Messrohr 16 einlaufenden Druckwellen und damit zu Messfehlern führen würde. Zur Kompensation bzw. Auslöschung der an den Temperatursprüngen erzeugten Reflexionen ist das Messrohr 16 an den Orten der Temperatursprünge jeweils mit einem Sprung im Durchmesser versehen: Beim Uebergang von T3 auf T2 verringert sich der Durchmesser des Messrohres von $D_3$ auf $D_2$; beim Uebergang von T2 auf T1 verringert sich der Durchmesser von $D_2$ auf $D_1$ (Fig. 2).

Damit die gewünschte Auslöschung der Reflexionen an den Sprüngen erfolgt, müssen in Abhängigkeit von den Temperaturen T1,..,T3 bzw. deren Verhältnissen die Durchmesser $D_1$,..,$D_3$ bzw. deren Verhältnisse geeignet gewählt werden. Die Wahl der Durchmesser ergibt sich aus der folgenden Analyse:

Das Messrohr 16 ist in drei Rohrabschnitte 1, 2 und 3 aufgeteilt, die jeweils den Durchmesser $D_1$, $D_2$ und $D_3$ aufweisen. Der Ort am Anfang jedes Rohrabschnittes (von der Brennkammer 15 aus gesehen) sei jeweils mit 1A, 2A und 3A, der Ort am Ende jedes Rohrabschnitts jeweils mit 1B, 2B und 3B bezeichnet. Betrachtet man ein Paar von Riemann-Invarianten f und g, so ergibt sich an dem dem Aussenraum zugewandten Ende des Messrohres 16, also am Ort 3B, aufgrund der Randbedingung bei einem offenen Rohr:

$$(1) \qquad f_{3B} = g_{3B} \ (=h).$$

Die Riemann-Invarianten können an den verschiedenen Orten 1A bis 3B nun wie folgt miteinander verknüpft werden:

$$(2) \qquad f_{3A} = f_{38}\exp(\alpha_3 L_3)\exp(i[\alpha_3 + \omega/c_3]L_3),$$

$$(3) \qquad g_{3A} = g_{3B}\exp(-\alpha_3 L_3)\exp(-i[\alpha_3 + \omega/c_3]L_3),$$

$$(4) \qquad 2f_{2B} = (c_2/c_3 + D_3^2/D_2^2)f_{3A} - (c_2/c_3 - D_3^2/D_2^2)g_{3A},$$

$$(5) \qquad 2g_{2B} = -(c_2/c_3 - D_3^2/D_2^2)f_{3A} + (c_2/c_3 + D_3^2/D_2^2)g_{3A},$$

$$(6) \qquad f_{2A} = f_{2B}\exp(\alpha_2 L_2)\exp(i[\alpha_2 + \omega/c_2]L_2),$$

$$(7) \qquad g_{2A} = g_{2B}\exp(-\alpha_2 L_2)\exp(-i[\alpha_2 + \omega/c_2]L_2),$$

$$(8) \qquad 2f_{1B} = (c_1/c_2 + D_2^2/D_1^2)f_{2A} - (c_1/c_2 - D_2^2/D_1^2)g_{2A},$$

$$(9) \qquad 2g_{1B} = -(c_1/c_2 - D_2^2/D_1^2)f_{2A} + (c_1/c_2 + D_2^2/D_1^2)g_{2A},$$

$$(10) \qquad f_{1A} = f_{1B}\exp(\alpha_1 L_1)\exp(i[\alpha_1 + \omega/c_1]L_1),$$

$$(11) \qquad g_{1A} = g_{1B}\exp(-\alpha_1 L_1)\exp(-i[\alpha_1 + \omega/c_1]L_1),$$

$$(12) \qquad 2\Delta p_{1A}/\rho_1 c_1 = f_{1A} - g_{1A},$$

wobei $L_1$, $L_2$, $L_3$ jeweils die Länge, $D_1$, $D_2$, $D_3$ jeweils den Durchmesser, $c_1$, $c_2$, $c_3$ jeweils die Schallgeschwindigkeit und $\alpha_1$, $\alpha_2$, $\alpha_3$ jeweils Dämpfungskoeffizienten aufgrund der Stokes-Grenzschicht des Rohrabschnitts 1, 2, 3 bedeuten, $\omega$ die Winkelgeschwindigkeit, $\rho_1$ die Dichte im Rohrabschnitt 1, und $\Delta p_{1A}$ den am Ort 1A zu messenden Druck bezeichnen. Für den Dämpfungskoeffizienten $\alpha$ kann auch geschrieben werden

$$(13) \qquad \alpha = \sqrt{(2\omega\nu)}/Dc[1 + (\gamma-1)/\sqrt{Pr}],$$

wobei $\nu$ die kinematische Viskosität, $\gamma$ das Verhältnis der spezifischen Wärmen und Pr die Prandtlzahl bezeichnet. Die Gleichung (13) stellt eine Näherung dar, die sehr genau ist, solange für die Dicke der Stokes-Grenzschicht gilt:

$$(14) \qquad \delta_{STOKES} = \sqrt{(\nu/\omega)} << D.$$

Es ist leicht zu erkennen, dass diese Bedingung für jede Situation von technischem Interesse sehr gut erfüllt ist. Die Abschneidefrequenz liegt typischerweise unterhalb 1 Hz. Aus den Gleichungen (4), (5), (8) und (9) ist sofort ersichtlich, dass die Wellenreflexion im Fall der Fig. 1 und 2 unterdrückt werden kann, wenn gilt:

$$(15) \qquad c_2/c_3 - D_3{}^2/D_2{}^2 = 0,$$

und

$$(16) \qquad c_1/c_2 - D_2{}^2/D_1{}^2 = 0.$$

Diese Bedingungen sind exakt erfüllt, wenn beispielsweise die Grössen gemäss nachfolgender Tabelle genommen werden, die typisch für den Brenner einer Gasturbine sind:

| Tabelle: | |
| --- | --- |
| Frequenzbereich | 1000 Hz |
| Druck | 16 bar |
| 1. Rohrabschnitt | |
| Temperatur $T_1$ | 1673 K |
| Durchmesser $D_1$ | 2,577 mm |
| Länge $L_1$ | 0,1 m |
| $\gamma$ | 1,3 |
| Pr | 0,71 |
| 2. Rohrabschnitt | |
| Temperatur $T_2$ | 673 K |
| Durchmesser $D_2$ | 3,235 mm |
| Länge $L_2$ | 0,4 m |
| $\gamma$ | 1,4 |
| Pr | 0,71 |
| 3. Rohrabschnitt | |
| Temperatur $T_3$ | 288 K |
| Durchmesser $D_3$ | 4 mm |
| Länge $L_3$ | 50 m |
| $\gamma$ | 1,4 |
| Pr | 0,71 |

Es versteht sich von selbst, dass bei anderen Randbedingungen entsprechend andere Durchmesserverhältnisse zu wählen sind.

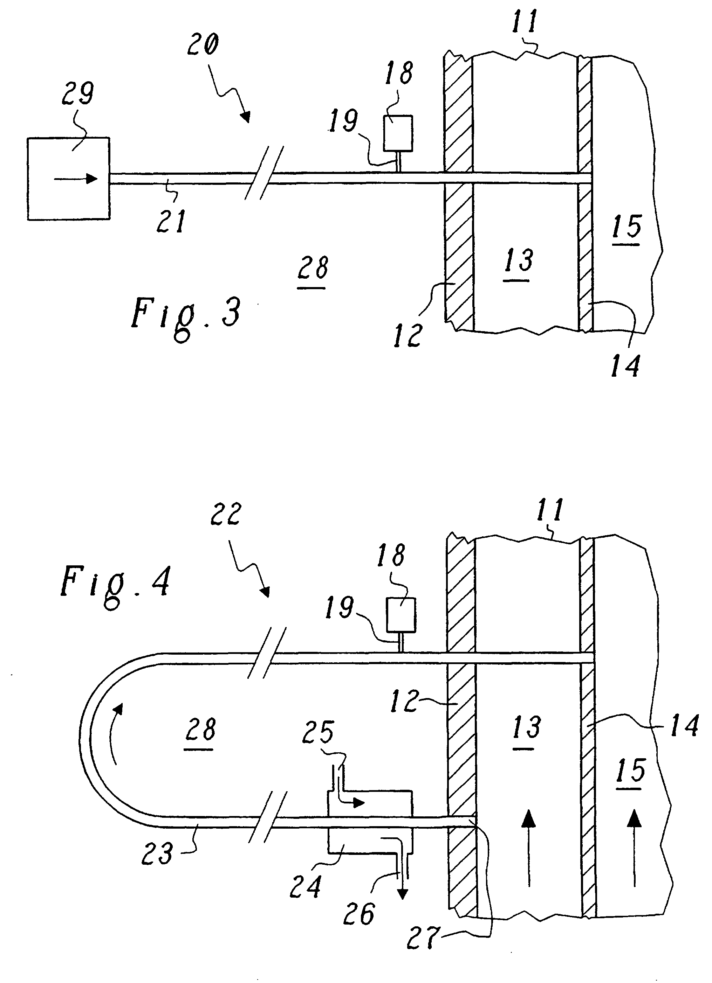

Ein anderes bevorzugtes Ausführungsbeispiel einer erfindungsgemässen Druckmesseinrichtung ist in Fig. 3 wiedergegeben. Die Druckmesseinrichtung 20 umfasst auch in diesem Fall ein Messrohr 21, welches aus der Brennkammer 15 durch die Brennkammerwand 14, das Plenum 13 und das Gasturbinengehäuse 12 der Gasturbine 11 in den Aussenraum 28 geführt ist. Auch hier ist hinter dem Gasturbinengehäuse 12 der Druckaufnehmer 18 über ein Anschlussrohr 19 an das Messrohr 21 angeschlossen. Die Temperaturverhältnisse (Temperaturstufen) können hier wieder dieselben sein, wie bei dem Beispiel aus Fig. 1 bzw. 2. Im Unterschied zum Ausführungsbeispiel der Fig. 1 ist das Messrohr in Fig. 3 mit einem konstanten Durchmesser (ohne Durchmesserstufen) ausgeführt. Eine Druckwellenreflexion an Temperaturstufen im Messrohr wird in diesem Fall nicht kompensiert, sondern gar nicht erst zugelassen. Dazu wird aus einer (externen) Kühlgasquelle 29 inertes Kühlgas durch das Messrohr 21 in Richtung auf die Brennkammer 15 hin geschickt. Das Kühlgas hält - wenn der Gasstrom ausreichend dimensioniert ist - das Messrohr 21 auf der gesamten Länge auf einer einheitlichen Temperatur (z.B. 288 K), so dass keine Temperatursprünge vorhanden sind und entsprechend keine Reflexionen entstehen können. Für ein Messrohr 21 mit einem Durchmesser von 4 mm reicht bei den o.g. Temperaturen dazu eine Kühlleistung von 100 W aus. Die Strömungsgeschwindigkeit im Messrohr 21 sollte dabei etwa Werte von 1 m/s erreichen.

Ein weiteres bevorzugtes Ausführungsbeispiel, welches auch eine Kühlung des Messrohrs vorsieht, aber auf eine externe Kühlgasquelle verzichtet, ist in Fig. 4 dargestellt. Das Messrohr 23 ist in diesem Fall durch den Aussenraum zur Gasturbine 11 zurückgeführt und mit dem freien Ende stromaufwärts von der Messtelle mit einer Einlassöffnung 27 an das Plenum 13 angeschlossen. Ein Teil der komprimierten Verbrennungsluft, die im Plenum 13 strömt, wird abgezweigt und als Kühlluft durch das Messrohr 23 vom Aussenraum 28 in die Brennkammer 15 geschickt. Die entnommene Kühlluft wird dabei vorzugsweise zur Reduzierung der Temperatur durch einen Kühler 24 geschickt, welcher das Messrohr 23 hinter der Entnahmestelle umschliesst. Der Kühler 24 hat einen Einlass 25 und einen Auslass 26, durch welche als Kühlmittel z.B. Wasser geleitet wird. Es ist aber auch denkbar, andere Formen der Kühlung einzusetzen, um der entnommenen Druckluft die gewünschte Temperatur zu geben.

Insgesamt ergibt sich mit der Erfindung eine Einrichtung, welche zur Messung von Druckschwankungen bzw. Druckoszillationen an auf hohen Temperaturen befindlichen Heissgasräumen mit vergleichsweise einfachen und preisgünstigen Druckaufnehmern auskommt, ohne an Messgenauigkeit einzubüssen.

**Patentansprüche**

1. Einrichtung zum Messen von Druckschwankungen, insbesondere in der Brennkammer einer Gasturbine, mit einem mit heissen Gasen einer ersten Temperatur (T1) gefüllten Raum (15), welcher durch wenigstens eine Wand (12, 14) gegen einen auf einer niedrigeren zweiten Temperatur (T3) befindlichen Aussenraum (28) abgegrenzt ist, wobei ein bezüglich der Druckschwankungen weitgehend von Endreflexionen freies Messrohr (16, 21, 23) von dem Raum (15) durch die wenigstens eine Wand (12, 14) in den Aussenraum (28) geführt ist, und wobei im Aussenraum (28) hinter der wenigstens einen Wand (12, 14) ein Druckaufnehmer (18) zum Aufnehmen der Druckschwankungen an das Messrohr (16, 21, 23) angeschlossen ist, **dadurch gekennzeichnet, dass** am Messrohr (16, 21, 23) erste Mittel vorgesehen sind, welche störende Reflexionen der sich im Messrohr (16, 21, 23) ausbreitenden Druckwellen an Temperatursprüngen im Messrohr (16, 21, 23) verhindern bzw. vor dem Eintritt in den Druckaufnehmer (18) unschädlich machen.

2. Einrichtung nach Anspruch 1, **dadurch gekennzeichnet, dass** im Messrohr (16) Temperatursprünge vorhanden sind, und dass die an den Temperatursprüngen im Messrohr (16) auftretenden Reflexionen der Druckwellen durch Reflexionen an entsprechenden Durchmessersprüngen im Innendurchmesser des Messrohres (16) kompensiert sind.

3. Einrichtung nach Anspruch 2, **dadurch gekennzeichnet, dass** die Durchmessersprünge im Messrohr (16) an den Orten der Temperatursprünge angeordnet sind.

4. Einrichtung nach Anspruch 3, **dadurch gekennzeichnet, dass** die jeweiligen Durchmesser eines Durchmessersprunges so gewählt sind, dass das Verhältnis der Durchmesser eines Durchmessersprunges gleich der 4ten Wurzel aus dem reziproken Verhältnis der Temperaturen des zugehörigen Temperatursprungs ist.

5. Einrichtung nach Anspruch 1, **dadurch gekennzeichnet, dass** die ersten Mittel derart ausgebildet sind, dass sie das Auftreten von Temperatursprüngen im Messrohr (21, 23) verhindern.

6. Einrichtung nach Anspruch 5, **dadurch gekennzeichnet, dass** die ersten Mittel eine Kühlgasquelle (29) umfassen, aus welcher Kühlgas durch das Messrohr (21) vom Aussenraum (28) in den Heissgasraum (15) strömt.

7. Einrichtung nach Anspruch 6, **dadurch gekennzeichnet, dass** als Kühlgas ein inertes Gas verwendet ist.

8. Einrichtung nach Anspruch 5, **dadurch gekennzeichnet, dass** der Heissgasraum die Brennkammer (15) einer Gasturbine (11) ist, dass der Brennkammer (15) komprimierte Verbrennungsluft zugeführt ist, und dass ein Teil der komprimierten Verbrennungsluft abgezweigt ist und als Kühlluft durch das Messrohr (23) vom Aussenraum (28) in den Heissgasraum (15) strömt.

9. Einrichtung nach Anspruch 8, **dadurch gekennzeichnet, dass** die Brennkammer (15) von einem Plenum (13) umgeben ist, durch welches komprimierte Verbrennungsluft strömt, dass die Kühlluft aus dem Plenum (13) stromaufwärts von der Messtelle des Messrohres (23) entnommen ist, und dass die entnommene Kühlluft zur Reduzierung der Temperatur durch einen Kühler (24) geschickt ist.

**10.** Einrichtung nach Anspruch 9, **dadurch gekennzeichnet, dass** das Messrohr (23) zur Einspeisung der Kühlluft mit seinem freien Ende direkt an das Plenum (13) angeschlossen ist, und dass der Kühler (24) das Messrohr (23) hinter der Entnahmestelle umschliesst.

**Claims**

**1.** Device for measuring pressure fluctuations, in particular in the combustion chamber of a gas turbine, with a space (15) which is filled with hot gases at a first temperature (T1) and is delimited by at least one wall (12, 14) from an outer space (28) which is at a lower second temperature (T3), a measuring tube (16, 21, 23) largely free of end reflections with regard to the pressure fluctuations being passed from the space (15) through the at least one wall (12, 14) into the outer space (28), and, in the outer space (28) behind the at least one wall (12, 14), a pressure sensor (18) for sensing the pressure fluctuations being connected to the measuring tube (16, 21, 23), **characterized in that** provided on the measuring tube (16, 21, 23) are first means which prevent disturbing reflections of the pressure waves, spreading in the measuring tube (16, 21, 23), at jumps in temperature in the measuring tube (16, 21, 23) or render said reflections harmless before entry into the pressure sensor (18).

**2.** Device according to Claim 1, **characterized in that** there are jumps in temperature in the measuring tube (16), and **in that** the pressure-wave reflections occurring at the jumps in temperature in the measuring tube (16) are compensated for by reflections at corresponding jumps in diameter at the inside diameter of the measuring tube (16).

**3.** Device according to Claim 2, **characterized in that** the jumps in diameter in the measuring tube (16) are arranged at the locations of the jumps in temperature.

**4.** Device according to Claim 3, **characterized in that** the respective diameters of a jump in diameter are selected in such a way that the ratio of the diameters of a jump in diameter is equal to the fourth root from the reciprocal ratio of the temperatures of the associated jump in temperature.

**5.** Device according to Claim 1, **characterized in that** the first means are designed in such a way that they prevent the occurrence of jumps in temperature in the measuring tube (21, 23).

**6.** Device according to Claim 5, **characterized in that** the first means comprise a cooling-gas source (29), from which cooling gas flows through the measuring tube (21) from the outer space (28) into the hot-gas space (15).

**7.** Device according to Claim 6, **characterized in that** an inert gas is used as cooling gas.

**8.** Device according to Claim 5, **characterized in that** the hot-gas space is the combustion chamber (15) of a gas turbine (11), **in that** compressed combustion air is fed to the combustion chamber (15), and **in that** some of the compressed combustion air is branched off and flows as cooling air through the measuring tube (23) from the outer space (28) into the hot-gas space (15).

**9.** Device according to Claim 8, **characterized in that** the combustion chamber (15) is surrounded by a plenum (13), through which compressed combustion air flows, **in that** the cooling air is bled from the plenum (13) upstream of the measuring location of the measuring tube (23), and **in that** the bled air is fed through a cooler (24) for reducing the temperature.

**10.** Device according to Claim 9, **characterized in that** the measuring tube (23), for feeding in the cooling air, is connected with its free end directly to the plenum (13), and **in that** the cooler (24) encloses the measuring tube (23) behind the bleed point.

**Revendications**

**1.** Dispositif pour mesurer des fluctuations de pression, en particulier dans la chambre de combustion d'une turbine à gaz, avec un espace (15) rempli de gaz chauds à une première température (T1), qui est délimité par au moins une paroi (12, 14) par rapport à un espace extérieur (28) se trouvant à une seconde température (T3) plus basse, dans lequel un tube de mesure (16, 21, 23) largement libre de réflexions d'extrémité en ce qui concerne les fluctuations de pression est mené depuis l'espace (15) à travers la au moins une paroi (12, 14) jusque dans l'espace extérieur (28), et dans lequel un capteur de pression (18) est raccordé au tube de mesure (16, 21, 23) dans l'espace extérieur (28), derrière la au moins une paroi (12, 14), afin de capter les fluctuations de la pression, **caractérisé en ce qu'**il est prévu sur le tube de mesure (16, 21, 23) des premiers moyens, qui empêchent, respectivement rendent inoffensives avant l'entrée dans le capteur de pression (18), des réflexions perturbatrices à des sauts de température dans le tube de mesure (16, 21, 23), des ondes de pression se propageant dans le tube de mesure (16, 21, 23).

2.  Dispositif suivant la revendication 1, **caractérisé en ce que** des sauts de température sont présents dans le tube de mesure (16), et **en ce que** les réflexions des ondes de pression se produisant aux sauts de température dans le tube de mesure (16) sont compensées par des réflexions à des sauts de diamètre correspondants dans le diamètre intérieur du tube de mesure (16).

3.  Dispositif suivant la revendication 2, **caractérisé en ce que** les sauts de diamètre sont disposés dans le tube de mesure (16) aux endroits des sauts de température.

4.  Dispositif suivant la revendication 3, **caractérisé en ce que** les diamètres respectifs d'un saut de diamètre sont choisis de telle manière que le rapport des diamètres d'un saut de diamètre soit égal à la racine quatrième de l'inverse du rapport des températures du saut de température considéré.

5.  Dispositif suivant la revendication 1, **caractérisé en ce que** les premiers moyens sont configurés de telle manière qu'ils empêchent l'apparition de sauts de température dans le tube de mesure (21, 23).

6.  Dispositif suivant la revendication 5, **caractérisé en ce que** les premiers moyens comprennent une source de gaz de refroidissement (29), de laquelle un gaz de refroidissement circule à travers le tube de mesure (21) depuis l'espace extérieur (28) jusque dans l'espace des gaz chauds (15).

7.  Dispositif suivant la revendication 6, **caractérisé en ce que** l'on utilise comme gaz de refroidissement un gaz inerte.

8.  Dispositif suivant la revendication 5, **caractérisé en ce que** l'espace des gaz chauds est la chambre de combustion (15) d'une turbine à gaz (11), **en ce que** de l'air de combustion comprimé est fourni à la chambre de combustion (15) et **en ce qu'**une partie de l'air de combustion comprimé est dérivée et circule comme air de refroidissement à travers le tube de mesure (23) depuis l'espace extérieur (28) vers l'espace des gaz chauds (15).

9.  Dispositif suivant la revendication 8, **caractérisé en ce que** la chambre de combustion (15) est entourée par un plénum (13), à travers lequel l'air de combustion comprimé circule, **en ce que** l'air de refroidissement est prélevé dans le plénum (13) en amont du point de mesure du tube de mesure (23) et **en ce que** l'air de refroidissement prélevé est envoyé à travers un refroidisseur (24) afin de réduire sa température.

10. Dispositif suivant la revendication 9, **caractérisé en ce que** le tube de mesure (23) est raccordé directement au plénum (13) par son extrémité libre pour l'introduction de l'air de refroidissement, et **en ce que** le refroidisseur (24) entoure le tube de mesure (23) derrière le point de prélèvement.

*Fig.1*

*Fig.2*

Fig.3

Fig.4